# EUROPEAN PATENT APPLICATION

(11) **EP 3 599 373 A1**
(43) Date of publication of application: **29.01.2020**
(21) Application number: 18185669.1
(22) Date of filing: 26.07.2018
(51) Int. Cl.: F02N 19/10, B60H 1/04, F01P 7/14, F28D 20/00

(54) **HEAT ACCUMULATION SYSTEM IN A HYBRID VEHICLE**

(30) Priority: 24.07.2018 PL 42643618
(71) Applicant: Kofama Kozle S.A., 47-205 Kedzierzyn - Kozle (PL)
(72) Inventor: Chyla, Stanislaw, 47-205 Kedzierzyn - Kozle (PL)
(74) Representative: Lampart, Jerzy

(57) **Abstract**

The heat accumulation system comprising a standard cooling system of a combustion engine (1) where a cooling liquid from the engine (1) through a junction (2) and mechanical pump (3) is provided under control of a control module (4) to an inlet of a return valve (5) or an inlet of a cooler (9) of the cooling system. An outlet of the cooler is coupled with an inlet of a return valve (8), whereas outlets of the return valves (5 and 8) are coupled with a junction (6) and further with an inlet of a return valve (7), and an outlet thereof through a junction (13) is coupled with an inlet for the cooling liquid in the combustion engine. The liquid from an outlet of the engine (1) through the junction (2) is provided to a cooling-heating medium accumulator supply module (14) and an outlet thereof is coupled with an inlet of a cooling-heating medium accumulator container (11). An outlet of the container (11) is coupled with an inlet of a cooling-heating medium accumulator drain module (12) and an outlet thereof is coupled with the junction (13), whereas the control module (4) is connected with a temperature meter (15) located in the cooling-heating medium accumulator (11).

## Description

The subject of the invention is a waste heat accumulation system in a small-size, multi-function service vehicle with green, serial, hybrid propulsion.

Nowadays, companies professionally using vehicles to transport goods and people, or using them to provide services (i.e. courier, catering, security or municipal service companies) pay particular attention mainly to economy of the means of transport they use. It refers to a vehicle functionality and parameters thereof, as well as impact on the environment.

Besides the pursuit of speed increase, reliability, safety, comfort and simplification of handling, there is a need to significantly decrease the amount and adverse effects of pollutants emitted to the atmosphere, reduce fuel consumption, decrease energy consumption and improve functionality and usability of the vehicles.

Despite a wide variety of vehicles offered by automotive companies, there is still small supply of means of transport having relevant reach and parameters, low emission factor, ability to move in enclosed spaces, possibility of modification and adjustment to a variety of functions, competitive price.

It is known from the patent description PL222912 a method to start a petrol combustion engine using a gaseous alternative fuel installation where heat from a heater is provided to an evaporator-reducer prior to, during and after the start-up of the engine in order to evaporate and warm up the gas so that the engine can operate steadily at a low temperature of a cooling liquid, and the gas dosages are determined - irrespective of petrol injection times during the start-up and warming up of the engine. The method of warming up by the start aid evaporator-reducer provides that the heat is supplied to the evaporator-reducer from the start aid heater when the evaporator-reducer needs to be warmed-up during the engine operation. The start aid heater comprises a body with screwed in glow plugs. The start aid heater controller controls the glow plugs operation and turns on a solenoid valve when the engine reaches the defined temperature. As a result, the engine is supplied with the heated gas during the start-up and warming up. The system construction requires the use of the start aid heater provided with the glow plugs. Similar approach, that is auxiliary complex devices, is presented in the hybrid vehicle known from the invention description JP2013160058 where to warm up a cooling liquid in a combustion engine a heater and heat pump from an air-conditioning system are used. Within this time, an electric motor and cooling liquid warming up systems are in operation.

It is known from the patent description PL 178500 (PCT/SE95/01188) a heat storage tank for a liquid-cooled internal combustion engine, intended for warming up of the engine prior to the start-up thereof, wherein a cylinder block is provided with a coolant pump and circulation ducts for the coolant, whereas the heat storage tank comprises a heat insulated storage container to store the heated coolant, piston means moving by a reciprocating motion, mounted in the container and operating with the aim to divide the said container into two chambers that are coupled with an inlet and outlet of the ducts for the coolant of the cylinder block, and the pump by means thereof the coolant can be pumped from the cylinder block ducts to the storage container wherein two chambers may be in liquid communication with each other through at least one valve means, provided in mobile piston means.

The object of the invention is construction of a heat recovery and distribution system in a small size, multi-function service vehicle with green, serial hybrid propulsion. The system should allow the use of a common cooling system of a combustion engine, waste heat accumulator, control system and electric motor so that heat accumulated in the heat accumulator at the start thereof be used to the greatest extend, or when operating using the electric motor the idle combustion engine be warmed-up. The principal object is to create the conditions where the combustion engine is started when the set temperature thereof has been reached.

The subject of the invention is a heat accumulation system built alongside a standard cooling system. A cooling liquid from an engine through a junction and mechanical pump is provided under control of a control module to an inlet of a return valve or an inlet of a cooler of the cooling system. An outlet of the cooler is coupled with an inlet of a return valve. Outlets of the return valves of both cooling circuits are coupled by a junction and further with an inlet of a return valve by the combustion engine while an outlet thereof is coupled through another junction with an inlet for the cooling liquid in the combustion engine. On the other side, the liquid from an outlet of the engine through a junction is provided to a supply module of a heating-cooling medium accumulator and an outlet thereof is coupled with an inlet of a container of the heating-cooling medium accumulator. Whereas, an outlet of the container is coupled with an inlet of a drain module of the heating-cooling medium accumulator, and an outlet thereof is coupled with a junction. A control module is connected with a temperature meter located in the heating-cooling medium of the accumulator.

The advantage of the system of recovery, accumulation and transmission of the heat to the cold combustion engine in the vehicle is the possibility to accumulate the heat during operation with the electric motor. The task of the heat is to maintain high temperature of the cooling liquid so that at the start-up the combustion engine warming-up takes the shortest time possible. The adequate temperature will be maintained by special insulation materials used by the heating industry. The system with the container ensures maximum drop of the cooling liquid temperature by 10 °C per day. It will allow to start-up the warm engine even after 3-4 days of standstill. A small increase in efficiency during the start-up, which, with frequent start-ups of the cold engine, means also significant reduction of fuel consumption. Starting the warm engine allows to reduce the wear thereof, which further reduces running costs. The reduction of the fuel consumption is almost not related to generally low fuel consumption that results from the vehicle moving with the mixed system as well as purely electric. The very serial system has an impact on improvement of the combustion efficiency. The combustion engine when started up runs all the time at the optimal range of rotations - which has an impact on even combustion and maintenance of optimal working parameters, and as a result the consumption lower than standard combustion engines of comparable capacity.

It is estimated that in a vehicle with a petrol engine emission of harmful substances, such as hydrocarbon compounds, multi-constituent mixtures of nitric oxides NOx, carbon oxide depends on the engine warm-up. With the engine warmed up the compounds are lower by 40% than at the cold engine start-up. Likewise for vehicles with a compression-ignition engine. Then, the benefits are approximately 17% - by that amount the exhaust gases are less contaminated when the engine temperature is maintained for a longer time at a higher temperature and system means are undertaken to extend that condition. Since the emission is the largest at the start-up, the system will significantly improve the global efficiency of the propulsion system.

The combustion engine within this system always operates according to the principle of maximizing the efficiency thereof because the operating conditions thereof do not depend on quick-change driving parameters, but depend on the buffer (electrical) system condition separated from the propulsion system by the battery operation.

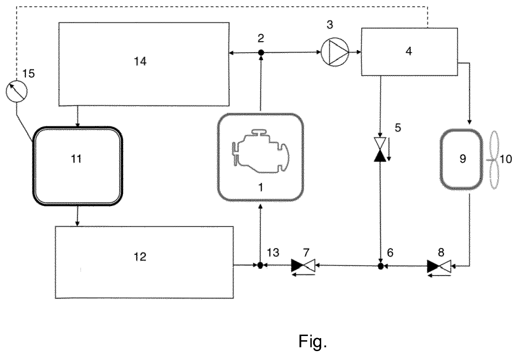

The subject of the invention is presented in the preferred embodiment in the drawing which depicts the heat recovery and accumulation system in a hybrid vehicle.

The heat accumulation system is built alongside the standard cooling system where a cooling liquid from an engine 1 through a junction 2 and mechanical pump 3 is provided under control of a control module 4 to an inlet of a return valve 5 or the inlet of a cooler 9 of the cooling system. An outlet of the cooler is coupled with an inlet of a return valve 8. Outlets of the return valves 5 and 8 are coupled by a junction 6 and further with an inlet of a return valve 7, whereas an outlet thereof through a junction 13 is coupled with an inlet for the cooling liquid in the combustion engine. On the other side, the liquid from the outlet of the engine 1 through the junction 2 is provided to a supply module 14 of a heating-cooling medium accumulator and an outlet thereof is coupled with an inlet of a container 11 of the heating-cooling medium accumulator. Whereas, the outlet of the container 11 is coupled with an inlet of a drain module 12 of the heating-cooling medium accumulator, and an outlet thereof is coupled with the junction 13. The control module 4 is connected with a temperature meter 15 located in the heating-cooling medium of the accumulator 11.

The heat accumulation and defined use of the heat to warm-up the combustion engine during driving of the hybrid vehicle comprises a standard cooling system of the combustion engine. That is, the cooling liquid from the combustion engine 1 through the junction 2 is pumped with the mechanical pump according to the direction of the arrows in the drawing. For operation of the pump and return valves it is responsible the control module 4. The liquid from the outlet of the pump is directed via the small circuit through the return valve 5 to the junction 6 and return valve 7 back to the combustion engine. When the temperature has reached the set value, the control module closes the valve 5 and opens the return valve 8. The liquid flows through the cooling system of the combustion engine provided with the cooler 9 and ventilator 10. However, after starting driving with the electric motor, the cooling liquid acts as the warming-up liquid and serves to warm-up the cold engine. It flows out at the temperature of approximately 90 °C from the cooling-heating medium accumulator 11 through the cooling-heating medium accumulator drain module 12 and junction 13 and reaches the combustion engine. The liquid quickly warms-up the combustion engine and allows better operation thereof after the starting. The excess heat produced by the operating combustion engine, apart from being directed to the cooler, through the cooling-heating medium accumulator supply module 14 is provided to the inlet of the container of the accumulator 11. The system is provided with the waste heat cooling-heating medium accumulator container of the capacity nearly double of the nominal capacity of the engine cooling system. The container is well thermally insulated so that the heat losses are minimal. In the heat accumulation process in the container 11 the temperature meter 15 is engaged, providing the temperature of the liquid to the control module 4 that controls the division of the liquid flow in three parallel circuits of the liquid circulation.

In serial propulsions, the combustion engine 1 operates all the time within the optimal range of rotations driving the electricity generator. The energy from the generator is transmitted to the propulsion engine and the excess to the battery. An electric motor, if needed, can also use the energy accumulated in the batteries that may be charged both by the combustion engine in the course of operation, during breaking (recovery of the breaking energy) and also via a special panel to charge from the mains - with the alternate current from the public power supplies. A hybrid vehicle with serial propulsion does not require a gear box to be mounted, which significantly reduces operating costs and weight of the vehicle.

During start-up, the vehicle starts solely with the electric motor, which definitely reduces fuel consumption. During the start-up, the engine 1 overcomes the largest inertia and thus consumes great amount of fuel, and as a result thereof it emits increased amounts of harmful compounds to the atmosphere. Moreover, at the start-up of the cold engine a number of adverse phenomena occur causing excessive and unnecessary emission of harmful substances, mainly carbon oxide (CO), nitric oxides (NOx) and hydrocarbons (HC). The cold walls of the combustion chamber unable total evaporation of the fuel included in the air-petrol mixture and as a result a non-complete combustion takes place the consequences thereof are the aforementioned adverse elements. The start-up of the combustion engine occurs only during travelling and the engine will drive the electric motor and charge the batteries. Due to the application of the common system of the combustion engine cooling, waste heat accumulator, control system and electric motor, during travelling with the electric motor the warming-up of the idle combustion engine takes place. The combustion engine can be started when it reaches the adequate temperature. During driving, the combustion engine is started and via the generator (generator/alternator) produces electric current and supplies the electric motor therewith, which in turn transforms the electric current to kinetic energy and transmits it to the wheels of the vehicle. The excess of power is redirected to the battery where the energy is accumulated for the time of driving in the areas where driving with an electric motor only is accepted (interior transport, city-centres, parks, eco-gardens, etc.).

In a hybrid vehicle the heat may be recovered not only from the combustion engine but also from other elements of the electrical apparatus of the vehicle (generator, electric motor, converters). Thus, the cooling-heating medium accumulator supply module 14 may be connected to other than engine 1 elements located in various locations in the vehicle. The efficiency of the heat recovery depends on construction of particular elements of the system (in particular, factory adjustments of the elements for heat recovery) and actual operating conditions.

The heat may be recovered in a form of a medium intended for direct use, for example the air directed to heat a vehicle compartment, seat heating, maintain constant temperature of an accumulator battery, or a indirect medium which can be a non-freeze liquid based on glycol. In transmitting the heat the cooling-heating medium accumulator drain module 12 may take part, coupled not only with the junction 3 and engine 1.

## Claims

1. The heat accumulation system comprising a standard cooling system of a combustion engine (1) where a cooling liquid from the engine (1) through a junction (2) and mechanical pump (3) is provided under control of a control module (4) to an inlet of a return valve (5) or an inlet of a cooler (9) of the cooling system. An outlet of the cooler is coupled with an inlet of a return valve (8), whereas outlets of the return valves (5 and 8) are coupled with a junction (6) and further with an inlet of a return valve (7), and an outlet thereof through a junction (13) is coupled with an inlet for the cooling liquid in the combustion engine, **characterized in that** the liquid from the outlet of the engine (1) through the junction (2) is provided to a cooling-heating medium accumulator supply module (14) and the outlet thereof is coupled with an inlet of a cooling-heating medium accumulator container (11), whereas an outlet of the container (11) is coupled with an inlet of a cooling-heating medium accumulator drain module (12) and an outlet thereof is coupled with the junction (13), whereas the control module (4) is connected with a temperature meter (15) located in the cooling-heating medium accumulator (11).
